# FASCICULE DE BREVET EUROPEEN

(11) **EP 2 525 062 B1**
(45) Date de publication et mention de la délivrance du brevet: **19.07.2017**
(21) Numéro de dépôt: 12290159.8
(22) Date de dépôt: 09.05.2012
(51) Int. Cl.: F02C 3/14, F02K 7/08, F23R 7/00

(54) **Turbomachine à chambre de détonation et engin volant pourvu d'une telle turbomachine**
Turbomaschine mit Detonationskammer, und mit einer solchen Turbomaschine ausgestattetes Fluggerät
Turbomachine with detonation chamber and aircraft provided with such a turbomachine

(30) Priorité: 16.05.2011 FR 1101483
(43) Date de publication de la demande: 21.11.2012
(73) Titulaire: MBDA France, 92350 Le Plessis-Robinson (FR)
(72) Inventeur: Falempin, Françoise, 78370 Saint Arnoult (FR); Le Naour, Bruno, 18000 Bourges (FR)
(74) Mandataire: Gevers & Orès

(56) Documents cités:
- WO-A1-2011/037597
- GB-A- 1 069 217
- US-A1- 2009 193 786
- US-A1- 2010 050 592

## Description

La présente invention concerne une turbomachine à chambre de détonation, ainsi qu'un engin volant, en particulier un avion, qui est pourvu d'une telle turbomachine.

Plus précisément, la présente invention est relative à tout type de turbomachine, tel qu'un turboréacteur, un turbopropulseur, un turbogénérateur ou une turbine à gaz, qui comporte de façon usuelle au moins, dans le sens d'écoulement des gaz, un compresseur, une chambre de combustion susceptible de générer un flux de gaz chauds à partir d'un mélange d'air provenant d'un flux d'air capté et d'un combustible, et une turbine qui est entraînée en rotation par ce flux de gaz chauds et qui entraîne ledit compresseur.

Une turbomachine récupère ainsi de l'énergie calorifique des gaz issus de la combustion réalisée dans la chambre de combustion par le biais de la turbine, dans le but d'entraîner le compresseur, ainsi que des accessoires qui sont nécessaires au bon fonctionnement de la machine (pompes, régulateurs,...).

De façon usuelle, cette chambre de combustion qui est destinée à générer un flux de gaz chauds est, généralement, une chambre de combustion à pression constante.

Par ailleurs on connaît :
- par le document GB - 1 069 217, un moteur comprenant une chambre de combustion annulaire permettant de générer une production continue de gaz chauds à partir d'un mélange détonant de combustible et d'air ;
- par le document US - 2010/0050592, un moteur à onde de détonation continue ;
- par le document US -2009/0193786, un système et une méthode pour générer une détonation continue dans une turbine à gaz ; et
- par le document WO - 2011/037597, un système et une méthode de combustion, comprenant notamment une chambre de combustion annulaire générant une onde de détonation continue.

La présente invention a pour objet de perfectionner une telle turbomachine afin, notamment, d'augmenter son rendement.

A cette fin, selon l'invention, ladite turbomachine du type comportant au moins, dans le sens d'écoulement des gaz, un compresseur, une chambre comprenant des moyens susceptibles de générer des gaz chauds à partir d'un mélange d'air provenant d'un flux d'air capté et d'un combustible, et une turbine qui est entraînée en rotation par lesdits gaz chauds et qui entraîne ledit compresseur, ladite chambre comportant un moteur à onde de détonation continue, pourvu d'une chambre de détonation annulaire et de moyens associés (système d'injection, moyens d'amorçage) permettant de générer une production continue de gaz chauds à partir d'un mélange détonant de combustible et d'air, ledit moteur à onde de détonation continue étant agencé de manière à former, à partir dudit flux d'air capté, un premier flux qui pénètre dans ladite chambre de détonation et qui est utilisé par ledit moteur et un second flux qui la contourne,
est remarquable en ce que ladite turbomachine comporte, de plus, des moyens auxiliaires pour mélanger les gaz chauds issus de la chambre de détonation avec ledit second flux d'air avant de les diriger vers la turbine, et en ce que le système d'injection injecte le combustible séparément de l'air et de façon directe dans la chambre de détonation.

Ainsi, selon la présente invention, on remplace sur une turbomachine (turboréacteur, turbopropulseur, turbine à gaz, turbogénérateur) la chambre de combustion usuelle à pression constante
par un moteur du type à onde de détonation continue, précisé ci-dessous. De plus, selon l'invention, on détourne une partie de l'air frais capté (air entrant) autour de la chambre de détonation, afin de faire fonctionner cette dernière à des niveaux de richesse suffisants pour assurer un fonctionnement stable et une efficacité thermodynamique optimale. Puis, on mélange cet air détourné (ou dérivé) avec les gaz chauds issus de la chambre de détonation de manière à limiter la température des gaz qui vont entraîner la turbine. A cet effet, on prévoit de préférence un système éjecteur/mélangeur qui permet la dilution des gaz chauds sortant de la chambre de détonation et qui confère une partie de leur quantité de mouvement à l'air frais dérivé afin d'obtenir, sur une distance relativement courte, un mélange de gaz qui présente une température compatible avec la tenue de la turbine.

De façon usuelle, un moteur à onde de détonation continue, de type CDWE (« Continuous Detonation Wave Engine » en anglais), comprend une chambre annulaire dans laquelle est générée une production continue de gaz chauds issus d'ondes de détonation auto-entretenues, comme précisé ci-dessous. On obtient ainsi, comme pour une chambre de combustion à pression constante, un générateur de gaz chauds qui constituent, dès la sortie de la chambre de détonation, un écoulement supersonique dont les caractéristiques sont relativement uniformes.

En revanche, du point de vue du cycle thermodynamique, la détonation conforme à la présente invention présente potentiellement un rendement de 15 à 25 % supérieur à celui d'une combustion à pression constante. De plus, par rapport à une chambre de combustion à pression constante de type moteur à détonation pulsée (PDE), on n'a pas à traiter le problème de l'environnement vibratoire très sévère généré, a priori, par un tel moteur à détonation pulsée. En effet, dans le cas du moteur CDWE, l'écoulement en sortie est relativement uniforme (mais supersonique) et ne génère pas de fréquences basses très néfastes pour le bruit et l'environnement subi par le reste (équipement, passagers) de l'engin équipé de la turbomachine.

Le remplacement conforme à l'invention d'une chambre de combustion usuelle à pression constante par un moteur de type CDWE pourvu d'une chambre de détonation permet, notamment, d'obtenir les avantages suivants, comme précisé ci-après :
- en raison d'un besoin moindre de taux de compression - a priori deux à trois fois moins à iso-performance - la possibilité de simplifier et réduire les étages de compresseur et donc de la turbine, et ainsi de réduire les coûts de développement et de production tout en réduisant la masse ; et
- pour une complexité et des performances équivalentes du ou des compresseurs (et donc de la ou des turbines), en raison de la meilleure efficacité du cycle thermodynamique, la possibilité de réduire sensiblement la consommation de combustible (15 à 20%) et, donc, les émissions de CO2. On notera également que la détente quasi-instantanée des gaz chauds derrière l'onde de détonation permet, malgré des températures maximales atteintes très élevées, de ne pratiquement pas produire d'oxydes d'azote (NOx).

Dans un mode de réalisation particulier, ladite turbomachine peut comporter de plus :
- un premier compresseur additionnel qui est agencé en aval dudit compresseur de manière à comprimer ledit second flux d'air ; et/ou
- un second compresseur additionnel qui est agencé en aval dudit compresseur et en amont de ladite chambre de détonation de manière à comprimer ledit premier flux d'air avant qu'il ne pénètre dans cette dernière.

Ce mode de réalisation particulier permet notamment d'assurer plus facilement le découplage entre le compresseur et la chambre de détonation de la turbomachine, en particulier pour éviter une remontée des ondes de détonation ou d'ondes de compression jusqu'au compresseur.

Par ailleurs, de façon avantageuse, ladite turbomachine peut comporter une pluralité de chambres de détonation annulaires, telles que celle précitée, qui sont agencées de manière concentrique. Ceci permet de créer des conditions de fonctionnement optimales sur une large plage de richesse globale en alimentant en combustible un nombre plus ou moins grand de ces chambres concentriques, et de limiter le choc de démarrage en répartissant dans le temps l'allumage de chaque chambre.

En outre, la turbomachine peut, avantageusement, comprendre au moins un circuit de refroidissement de ladite chambre de détonation dans lequel peut circuler du combustible avant son injection dans cette dernière. De préférence, ledit circuit de refroidissement s'étend le long d'au moins une paroi latérale de ladite chambre de détonation, sur au moins une partie de sa longueur.

Ainsi, on peut refroidir la chambre de détonation à l'aide d'une partie ou de l'intégralité du combustible avant de l'injecter dans ladite chambre. Cela permet d'assurer la tenue thermique de la chambre de détonation tout en vaporisant au moins une partie du combustible à injecter au cours de sa circulation dans ledit circuit. Une injection directe du combustible prévaporisé garantit l'initiation et la stabilité de la détonation du mélange détonant combustible-air. On prévient également des problèmes liés aux délais d'évaporation des gouttes de combustibles et de réaction chimique.

La présente invention peut être appliquée à tout type de turbomachine : turboréacteur, turbopropulseur, turbogénérateur, turbine à gaz. De plus, elle peut être mise en oeuvre :
- sur une turbomachine usuelle du type à simple flux, comprenant un flux unique. Dans ce cas, ledit moteur à onde de détonation continue est agencé de manière à agir sur ledit flux unique ; ou
- sur une turbomachine usuelle du type à double flux, comprenant un flux primaire et un flux secondaire. Dans ce cas, ledit moteur CDWE est agencé de manière à agir sur ledit flux primaire.

La présente invention concerne également un engin volant, en particulier un avion, qui est pourvu d'au moins une turbomachine telle que celle précitée.

La présente invention concerne en outre un système de génération d'énergie qui est installé au sol, et qui est muni d'au moins une telle turbomachine.

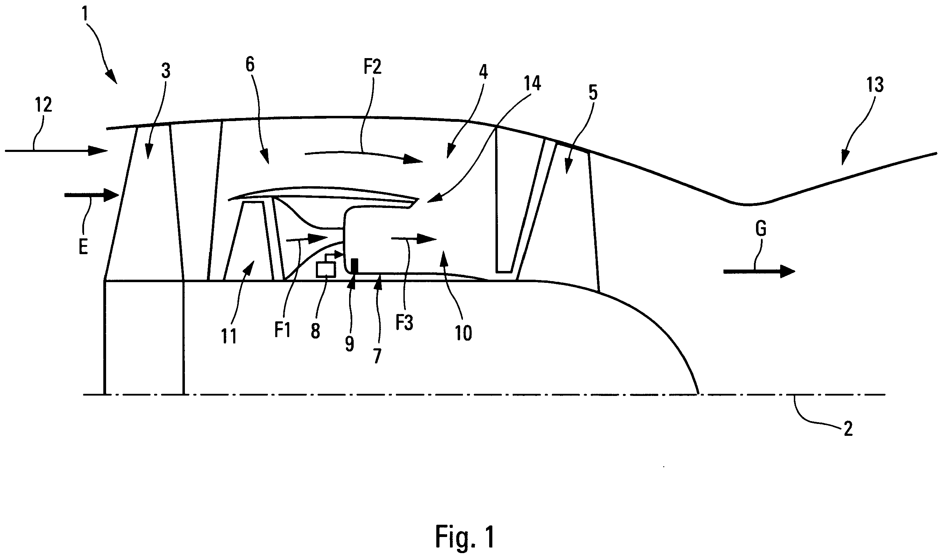

L'unique figure du dessin annexé fera bien comprendre comment l'invention peut être réalisée. Cette figure unique est une vue schématique partielle en coupe d'une turbomachine définie de façon générale, à laquelle on applique la présente invention.

La turbomachine 1 représentée schématiquement et partiellement sur la figure présente un axe 2 et comprend, de façon usuelle, dans le sens 12 d'écoulement des gaz, en aval d'une entrée d'air (non représentée), dont le flux d'air capté est illustré par une flèche E :
- un ou plusieurs compresseurs 3 usuels ;
- une chambre 4 susceptible de générer des gaz chauds à partir d'un mélange d'air provenant dudit flux d'air capté E et d'un combustible usuel ;
- une ou plusieurs turbines usuelles 5 qui sont entraînées en rotation par lesdits gaz chauds et qui entraînent ledit ou lesdits compresseurs 3, ainsi que des accessoires usuels (non représentés) qui sont nécessaires au bon fonctionnement de la turbomachine 1 (pompes, régulateurs,...) ; et
- des moyens 13 (tuyère) permettant l'échappement des gaz, comme illustré par une flèche G.

Tous ces éléments qui sont bien connus et qui peuvent être réalisés de différentes manières de façon usuelle, ne sont pas décrits davantage ci-dessous. Cette présentation générale permet de montrer que la présente invention peut être appliquée à tout type de turbomachine 1 présentant les caractéristiques générales précédentes. Elle peut notamment être appliquée à un turboréacteur, à un turbopropulseur, à une turbine à gaz, ou à un turbogénérateur.

On notera que, dans la présente description, les notions de amont et aval sont définies par rapport au sens 12 d'écoulement des gaz.

Selon l'invention, dans le but de perfectionner ladite turbomachine 1 :
- ladite chambre 4 est pourvue d'un moteur 6 à onde de détonation continue de type CDWE (« Continuous Détonation Wave Engine » en anglais). Ce moteur 6 comprend notamment une chambre de détonation annulaire 7 qui est agencée de façon concentrique par rapport à l'axe 2, ainsi que des moyens associés 8 et 9 (précisés ci-dessous) nécessaires à son fonctionnement, et il est susceptible de générer une production continue de gaz chauds à partir d'un mélange détonant de combustible et d'air ;
- ledit moteur 6 à onde de détonation continue est agencé dans ladite chambre 4 en aval dudit compresseur 3 de manière à utiliser une partie du flux d'air capté E. Plus précisément, cet agencement permet de former, à partir dudit flux d'air capté E :
   - un premier flux d'air F1 qui pénètre dans ladite chambre de détonation 7 et qui est utilisé par ledit moteur 6 pour former des gaz chauds (flux F3) ; et
   - un second flux d'air F2 qui contourne ladite chambre de détonation 7; et
- ladite turbomachine 1 comporte, de plus, un système éjecteur/mélangeur 10 (non représenté spécifiquement) pour mélanger les gaz chauds (flux F3) issus de la chambre de détonation 7 avec ledit second flux d'air F2 avant de diriger ce mélange vers la turbine 5 pour l'entraîner.

Ainsi, la présente invention prévoit de remplacer sur une turbomachine 1 (turboréacteur, turbopropulseur, turbine à gaz, turbogénérateur) le générateur usuel de gaz chauds, à savoir une chambre de combustion à pression constante, par un moteur CDWE 6 du type à onde de détonation continue.

De façon usuelle, un tel moteur CDWE 6 comprend une chambre annulaire 7 dans laquelle est générée une production continue de gaz chauds issus d'ondes de détonation auto-entretenues. Sur un tel moteur 6, un système d'injection 8 injecte de façon permanente du combustible dans la chambre annulaire 7. Ce combustible se mélange à l'air frais dudit flux F1 pour former un mélange détonant. On amorce alors dans ce mélange détonant une onde de détonation à l'aide de moyens d'amorçage 9 usuels (fil à exploser, tube de pré-détonation...). Cette onde se propage de façon circonférentielle dans le mélange détonant frais, tandis que les gaz chauds qu'elle produit se détendent dans le reste de la chambre annulaire 7. Comme l'injection de mélange détonant frais est permanente, lorsque l'onde revient à son point de départ, elle rencontre à nouveau du mélange frais et poursuit son mouvement circonférentiel qui devient donc continu. En fait, en aval de l'onde de détonation, et après la détente initiale des gaz chauds, une couche de mélange frais se développe qui, parce qu'elle est en contact avec les gaz chauds et sous certaines conditions, va donner lieu à une nouvelle onde de détonation auto-initiée. On obtient ainsi une chambre annulaire 7 dans laquelle une série d'ondes de détonation circonférentielles défilant à la fréquence de plusieurs kHz (jusqu'à 30 kHz) produit des gaz chauds qui se détendent vers l'extrémité aval ouverte 14 de la chambre 7.

Ainsi, selon l'invention, on utilise une partie F1 de l'air frais capté E de manière à faire fonctionner le moteur 6 à des niveaux de richesse suffisants pour assurer un fonctionnement stable et une efficacité thermodynamique optimale.

De plus, le système éjecteur/mélangeur 10 mélange les gaz chauds F3 issus de la chambre de détonation 7 avec ledit second flux F2 (d'air froid) de manière à limiter la température des gaz (mélange F2 et F3) qui vont entraîner la turbine 5. Ce système éjecteur/mélangeur 10 est formé de manière à permettre la dilution des gaz chauds F3 sortant de la chambre de détonation 7 et à conférer une partie de leur quantité de mouvement à l'air frais F2 dérivé afin d'obtenir, sur une distance relativement courte, un mélange de gaz qui présente une température compatible avec la tenue de la turbine 5. Ainsi, on est en mesure de faire fonctionner la chambre de détonation 7 à une richesse suffisante pour obtenir un fonctionnement stable et efficace (avec des conditions proches des conditions Chapman-Jouguet), tout en maintenant une température suffisamment faible à l'entrée de la turbine 5 pour assurer sa tenue thermique.

Grâce à l'ensemble des caractéristiques précédentes, on obtient donc, comme pour une chambre de combustion à pression constante, une génération continue de gaz chauds qui constituent, dès la sortie de la chambre de détonation 7, un écoulement supersonique dont les caractéristiques sont relativement uniformes.

En revanche, du point de vue du cycle thermodynamique, la détonation mise en oeuvre par le moteur 6 présente potentiellement un rendement de 15 à 25 % supérieur à celui d'une combustion à pression constante.

Le remplacement conforme à l'invention d'une chambre de combustion usuelle à pression constante par un moteur 6 de type CDWE pourvue d'une chambre de détonation 7 permet notamment d'obtenir les avantages suivants :
- en raison d'un besoin moindre de taux de compression - a priori deux à trois fois moins à iso-performance - la possibilité de simplifier et réduire les étages du compresseur 3 et donc de la turbine 5, et ainsi de réduire les coûts de développement et de production de la turbomachine 1 tout en réduisant sa masse ; et
- pour une complexité et des performances équivalentes du ou des compresseurs 3 (et donc de la ou des turbines 5), en raison de la meilleure efficacité du cycle thermodynamique, la possibilité de réduire sensiblement la consommation de combustible (15 à 20%) et, donc, les émissions de CO2. On notera également que la détente quasi-instantanée des gaz chauds derrière l'onde de détonation permet, malgré les températures maximales atteintes très élevées, de ne pratiquement pas produire d'oxydes d'azote (NOx).

Par ailleurs, le système d'injection 8 injecte le combustible usuel séparément de l'air (flux F1). On ne prévoit donc pas d'injection en prémélange, ce qui permet d'éviter tout risque d'inflammation en amont de la chambre de détonation 7. En outre, dans le cas d'un combustible stockable tel qu'un hydrocarbure liquide, on peut également prévoir un circuit régénératif (non représenté) permettant de prévaporiser le combustible (avant son injection) et d'obtenir ainsi des conditions de mélange et de détonation satisfaisantes sans prémélange. De préférence, ce circuit régénératif (ou de refroidissement), dans lequel circule du combustible, s'étend le long d'au moins une paroi latérale de ladite chambre de détonation, sur au moins une partie de sa longueur.

Par ailleurs, on peut également prévoir un système d'injection d'air (qui est par exemple réalisé sous forme d'une fente annulaire formant un canal d'alimentation d'air) à l'entrée de la chambre de détonation 7, permettant de réaliser un découplage entre cette chambre 7 et la partie amont.

Dans un mode de réalisation particulier, ladite turbomachine 1 comporte de plus, au moins un compresseur additionnel 11 (ou surpresseur) qui est agencé en aval dudit compresseur 3 et en amont de ladite chambre de détonation 7 (dans le sens d'écoulement 12) de manière à comprimer ledit flux d'air F1 avant qu'il ne pénètre dans cette dernière.

Ce mode de réalisation particulier permet, notamment, d'assurer plus facilement le découplage entre le compresseur 3 et la chambre de détonation 7, en particulier pour éviter une remontée des ondes de détonation ou d'ondes de compression jusqu'au compresseur 3.

En outre, ladite turbomachine 1 peut comporter, de plus, au moins un autre surpresseur ou compresseur additionnel (non représenté) qui est agencé de manière à agir sur ledit flux d'air F2 contournant la chambre de détonation 7.

Par ailleurs, dans un autre mode de réalisation, ladite turbomachine 1 peut comprendre une pluralité (deux ou plus) de moteurs 6 (tel que celui précité) et donc une pluralité de chambres de détonation 7 qui sont agencées de manière concentrique les unes par rapport aux autres, relativement à l'axe 2. Ceci permet notamment :
- de créer des conditions de fonctionnement optimales sur une large plage de richesses. En effet, pour une chambre de détonation 7 donnée, il est possible d'atteindre de très bonnes performances dans un domaine limité de richesse injectée (vitesse d'onde très proche de la vitesse Chapman-Jouguet dans les conditions considérées), mais en général avec des performances plus réduites pour d'autres richesses. Aussi, en prévoyant plusieurs chambres de détonation 7 concentriques, présentant éventuellement des caractéristiques différentes, on peut obtenir de bonnes performances sur une large plage de richesse globale en alimentant en combustible un nombre plus ou moins grand de ces chambres concentriques 7 ; et
- de limiter le choc de démarrage en répartissant dans le temps l'allumage de chaque chambre 7.

La présente invention peut être appliquée à tout type de turbomachine 1. Ainsi, elle peut être appliquée, comme représenté sur la figure, à une turbomachine 1 du type à simple flux, comprenant un flux d'air unique E. Dans ce cas, ledit moteur 6 et donc ladite chambre de détonation 7 sont agencés de manière à agir sur ledit flux unique E, comme décrit ci-dessus.

La présente invention peut également être appliquée à une turbomachine usuelle du type à double flux, comprenant un flux primaire et un flux secondaire. Sur une telle turbomachine, l'air pré-comprimé ne passe pas intégralement par le moteur, mais une partie (flux froid ou flux primaire) le contourne par sa périphérie jusqu'à la tuyère où il est éjecté avec les gaz chauds (flux chaud ou flux primaire). Dans une telle application, ledit moteur 6 et donc ladite chambre de détonation 7 sont agencés de manière à agir uniquement sur ledit flux primaire.

## Revendications

1. Turbomachine du type comportant au moins, dans le sens (12) d'écoulement des gaz, un compresseur (3), une chambre (4) comprenant des moyens susceptibles de générer des gaz chauds à partir d'un mélange d'air provenant d'un flux d'air capté et d'un combustible, et une turbine (5) qui est entraînée en rotation par lesdits gaz chauds et qui entraîne ledit compresseur (3), ladite chambre (4) comportant un moteur (6) à onde de détonation continue, pourvu d'une chambre de détonation annulaire (7) et de moyens associés (8, 9) permettant de générer une production continue de gaz chauds à partir d'un mélange détonant de combustible et d'air, ledit moteur (6) à onde de détonation continue étant agencé de manière à former, à partir dudit flux d'air capté (E), un premier flux (F1) qui pénètre dans ladite chambre de détonation (7) et qui est utilisé par ledit moteur (6) et un second flux (F2) qui la contourne,
**caractérisée en ce que** ladite turbomachine (1) comporte, de plus, des moyens auxiliaires (10) pour mélanger les gaz chauds (F3) issus de la chambre de détonation (7) avec ledit second flux d'air (F2) avant de les diriger vers la turbine (5), et **en ce que** le système d'injection (8) injecte le combustible séparément de l'air et de façon directe dans la chambre de détonation (7).

2. Turbomachine selon la revendication 1,
**caractérisée en ce que** lesdits moyens auxiliaires (10) comportent un système éjecteur/mélangeur permettant la dilution des gaz chauds (F3) et la restitution d'une partie de leur quantité de mouvement à l'air frais dudit second flux (F2) d'air afin d'obtenir un mélange de gaz présentant une température compatible avec la tenue de la turbine (5).

3. Turbomachine selon l'une des revendications 1 et 2,
**caractérisée en ce qu'**elle comporte au moins un compresseur additionnel (11) qui est agencé en aval dudit compresseur (3) et en amont de ladite chambre de détonation (7) de manière à comprimer ledit premier flux d'air (F1) avant qu'il ne pénètre dans cette dernière.

4. Turbomachine selon l'une des revendications 1 à 3,
**caractérisée en ce qu'**elle comporte au moins un compresseur additionnel qui est agencé en aval dudit compresseur (3) de manière à comprimer ledit second flux d'air (F2).

5. Turbomachine selon l'une des revendications 1 à 4,
**caractérisée en ce qu'**elle comporte une pluralité de moteurs (6), dont les chambres de détonation (7) sont agencées de manière concentrique.

6. Turbomachine selon l'une des revendications 1 à 5,
**caractérisée en ce qu'**elle comporte au moins un circuit de refroidissement de ladite chambre de détonation dans lequel circule du combustible liquide, permettant de prévaporiser le combustible avant son injection dans la chambre de détonation.

7. Turbomachine selon la revendication 6,
**caractérisée en ce que** ledit circuit de refroidissement s'étend le long d'au moins une paroi latérale de ladite chambre de détonation, sur au moins une partie de sa longueur.

8. Turbomachine selon l'une des revendications 1 à 7,
**caractérisée en ce qu'**elle est du type à simple flux, comprenant un flux unique (E), et **en ce que** ledit moteur (6) à onde de détonation continue est agencé de manière à agir sur ledit flux unique (E).

9. Turbomachine selon l'une des revendications 1 à 7,
**caractérisée en ce qu'**elle est du type à double flux, comprenant un flux primaire et un flux secondaire, et **en ce que** ledit moteur (6) à onde de détonation continue est agencé de manière à agir sur ledit flux primaire.

10. Engin volant, en particulier un avion,
**caractérisé en ce qu'**il est pourvu d'au moins une turbomachine (1) telle que celle spécifiée sous l'une quelconque des revendications 1 à 9.

11. Système de génération d'énergie,
**caractérisé en ce qu'**il est pourvu d'au moins une turbomachine (1) telle que celle spécifiée sous l'une quelconque des revendications 1 à 9.

## Patentansprüche

1. Turbomaschine, vom Typ mindestens umfassend, in der Gasströmungsrichtung (12), einen Kompressor (3), eine Kammer (4), umfassend Mittel, die geeignet sind, heiße Gase aus einem Luftgemisch zu erzeugen, das von einem erfassten Luftstrom und einem Kraftstoff stammt, und eine Turbine (5), die von den heißen Gasen in Rotation angetrieben wird und die den Kompressor (3) antreibt, wobei die Kammer (4) einen kontinuierlichen Detonationswellenmotor (6) umfasst, der mit einer ringförmigen Detonationskammer (7) und zugeordneten Mitteln (8, 9) versehen ist, die gestatten, eine kontinuierliche Erzeugung von heißen Gasen aus einem Detonationsgemisch von Kraftstoff und Luft zu generieren, wobei der kontinuierliche Detonationswellenmotor (6) eingerichtet ist, aus dem erfassten Luftstrom (E), einen ersten Strom (F1), der in die Detonationskammer (7) eintritt und der von dem Motor (6) verwendet wird, und einen zweiten Strom (F2), der diese umgeht, zu bilden,
**dadurch gekennzeichnet, dass** die Turbomaschine (1) ferner Hilfsmittel (10) umfasst, um die heißen Gase (F3) aus der Detonationskammer (7) mit dem zweiten Luftstrom (F2) zu mischen, bevor sie zur Turbine (5) gerichtet werden, und dass das Einspritzsystem (8) den Kraftstoff getrennt von der Luft und direkt in die Detonationskammer (7) einspritzt.

2. Turbomaschine nach Anspruch 1, **dadurch gekennzeichnet, dass** die Hilfsmittel (10) ein Ausstoß/Mischsystem umfassen, das die Verdünnung der heißen Gase (F3) und die Rückführung eines Teils ihrer bewegten Menge in der Frischluft des zweiten Luftstroms (F2) gestattet, um ein Gasgemisch zu erhalten, das eine mit dem Verhalten der Turbine (5) kompatible Temperatur aufweist.

3. Turbomaschine nach einem der Ansprüche 1 und 2, **dadurch gekennzeichnet, dass** diese mindestens einen zusätzlichen Kompressor (11) umfasst, der stromabwärts von dem Kompressor (3) und stromaufwärts von der Detonationskammer (7) eingerichtet ist, um den ersten Luftstrom (F1) zu komprimieren, bevor er in diese Letztere eintritt.

4. Turbomaschine nach einem der Ansprüche 1 bis 3, **dadurch gekennzeichnet, dass** diese mindestens einen zusätzlichen Kompressor umfasst, der stromabwärts von dem Kompressor (3) eingerichtet ist, um den zweiten Luftstrom (F2) zu komprimieren.

5. Turbomaschine nach einem der Ansprüche 1 bis 4, **dadurch gekennzeichnet, dass** diese mehrere Motoren (6) umfasst, deren Detonationskammern (7) konzentrisch eingerichtet sind.

6. Turbomaschine nach einem der Ansprüche 1 bis 5, **dadurch gekennzeichnet, dass** diese mindestens einen Kühlkreislauf der Detonationskammer umfasst, in dem Flüssigkraftstoff zirkuliert, wodurch gestattet wird, dass der Kraftstoff vor seiner Einspritzung in die Detonationskammer vorverdampft wird.

7. Turbomaschine nach Anspruch 6, **dadurch gekennzeichnet, dass** sich der Kühlkreislauf entlang mindestens einer Seitenwand der Detonationskammer, über mindestens einen Teil ihrer Länge, erstreckt.

8. Turbomaschine nach einem der Ansprüche 1 bis 7, **dadurch gekennzeichnet, dass** diese vom Einstrom-Typ ist, umfassend einen einzigen Strom (E), und dass der kontinuierliche Detonationswellenmotor (6) eingerichtet ist, auf den einzigen Strom (E) einzuwirken.

9. Turbomaschine nach einem der Ansprüche 1 bis 7, **dadurch gekennzeichnet, dass** diese vom Zweistrom-Typ ist, umfassend einen primären Strom und einen sekundären Strom, und dass der kontinuierliche Detonationswellenmotor (6) eingerichtet ist, auf den primären Strom einzuwirken.

10. Fluggerät, insbesondere ein Flugzeug, **dadurch gekennzeichnet, dass** dieses mit mindestens einer Turbomaschine (1), wie der in einem der Ansprüche 1 bis 9 spezifizierten, versehen ist.

11. Energieerzeugungssystem, **dadurch gekennzeichnet, dass** dieses mit mindestens einer Turbomaschine (1), wie der in einem der Ansprüche 1 bis 9 spezifizierten, versehen ist.

## Claims

1. Turbomachine of the type comprising at least, in the flow direction (12) of the gases, a compressor (3), a chamber (4) comprising means capable of generating hot gases from an air mixture originating from a captured air flow and from a fuel, and a turbine (5) which is driven in rotation by said hot gases and which drives said compressor (3), said chamber (4) comprising a continuous detonation wave engine (6), fitted with an annular detonation chamber (7) and associated means (8, 9) making it possible to generate continuous production of hot gases from an explosive fuel and air mixture, said continuous detonation wave engine (6) being arranged so as to form, from said captured air flow (E), a first flow (F1) which enters said detonation chamber (7) and which is used by said engine (6), and a second flow (F2) which bypasses said chamber, **characterised in that** said turbomachine (1) comprises, in addition, auxiliary means (10) for mixing the hot gases (F3) emanating from the detonation chamber (7) with said second air flow (F2) before conducting them towards the turbine (5), and **in that** an injection system (8) injects the fuel separately to the air and directly into the detonation chamber (7).

2. Turbomachine according to claim 1, **characterised in that** said auxiliary means (10) comprise an ejector/mixing system which allows the hot gases (F3) to be diluted and part of the momentum thereof to be returned to the cool air of said second air flow (F2) in order to obtain a gas mixture which has a temperature which is compatible with the behaviour of the turbine (5).

3. Turbomachine according to either claim 1 or claim 2, **characterised in that** said turbomachine comprises at least one additional compressor (11) which is arranged downstream of said compressor (3) and upstream of said detonation chamber (7) so as to compress said first air flow (F1) before it enters said chamber.

4. Turbomachine according to any of claims 1 to 3, **characterised in that** said turbomachine comprises at least one additional compressor which is arranged downstream of said compressor (3) so as to compress said second air flow (F2).

5. Turbomachine according to any of claims 1 to 4, **characterised in that** it comprises a plurality of engines (6), whose detonation chambers (7) are arranged in a concentric manner.

6. Turbomachine according to any of claims 1 to 5, **characterised in that** said turbomachine comprises at least one circuit for cooling said detonation chamber, in which circuit liquid fuel circulates, making it possible to pre-evaporate the fuel before the injection thereof into said detonation chamber.

7. Turbomachine according to claim 6, **characterised in that** said cooling circuit extends along at least one lateral wall of said detonation chamber, over at least part of the length thereof.

8. Turbomachine according to any of claims 1 to 7, **characterised in that** said turbomachine is of the single flow type, comprising a single flow (E), and **in that** said continuous detonation wave engine (6) is arranged so as to act on said single flow (E).

9. Turbomachine according to any of claims 1 to 7, **characterised in that** said turbomachine is of the double flow type, comprising a primary flow and a secondary flow, and **in that** said continuous detonation wave engine (6) is arranged so as to act on said primary flow.

10. Flying vehicle, in particular an aeroplane, **characterised in that** said vehicle is fitted with at least one turbomachine (1) as specified in any of claims 1 to 9.

11. Power generation system, **characterised in that** said system is fitted with at least one turbomachine (1) as specified in any of claims 1 to 9.
